# EUROPÄISCHE PATENTANMELDUNG

(11) **EP 2 072 952 A2**
(43) Veröffentlichungstag der Anmeldung: **24.06.2009**
(21) Anmeldenummer: 08019208.1
(22) Anmeldetag: 03.11.2008
(51) Int. Cl.: G01C 21/32

(54) **Verfahren zur erzeugung einer elektronisch speicherbaren, digitalen landkarte**

(30) Priorität: 21.12.2007 DE 102007062991
(71) Anmelder: Navigon AG, 20251 Hamburg (DE)
(72) Erfinder: Tudose, Radu, 97072 Würzburg (DE)
(74) Vertreter: von den Steinen, Axel

(57) **Zusammenfassung**

Die Erfindung betrifft ein Verfahren zur Erzeugung einer auf einem elektronischen Speichermedium speicherbaren, digitalen Landkarte, in der ein geographisches Gebiet durch eine Vielzahl von Datensätzen beschrieben ist, mit folgenden Verfahrensschritten:
a) Laden einer Ausgangsdatenbank (01), in der das geographische Gebiet durch eine Vielzahl von Datensätzen beschrieben ist, in eine elektronische Analyseeinrichtung, wobei jeder Datensatz ein Objekt der Landkarte beschreibt, und wobei jeder Datensatz aus einer definierten Anzahl von Attributen besteht, und wobei jedes Attribut eine definierte Anzahl von unterschiedlichen Attributwerten annehmen kann,
b) Feststellung von in den Datensätzen der Datenbank vorkommenden Attributwertkombinationen oder Attributwertunterkombinationen,
c) Zuordnung eines eindeutigen Kombinationskennzeichens zu jeder Attributwertkombination oder Attributwertunterkombination,
d) Speicherung der in der Datenbank festgestellten Attributwertkombinationcn oder Attributwertunterkombinationen mit den jeweils zugeordneten Kombinationskennzeichen als erste Teildatenbank (02) der digitalen Landkarte,
e) Analyse aller Datensätze der Ausgangsdatenbank (01), wobei zu jedem Datensatz ein neuer Datensatz dadurch erzeugt wird, dass die in jedem Datensatz vorhandenen Attributwertkombinationen oder Attributwertunterkombinationen durch das den Attributwertkombinationen oder Attributwertunterkombinationen zugeordnete Kombinationskennzeichen ersetzt werden,
f) Speicherung der neuen Datensätze in einer zweiten Teildatenbank (03) der digitalen Landkarte.

## Beschreibung

Die Erfindung betrifft ein Verfahren zur Erzeugung einer auf einem elektronischen Speichermedium speicherbaren, digitalen Landkarte.

Derartige digitale Landkarten werden beispielsweise, jedoch keineswegs ausschließlich, beim Betrieb von mobilen oder fest eingebauten Navigationsgeräten benutzt. Grundlage der Satellitennavigation ist dabei die Beschreibung eines geographischen Gebiets, beispielsweise des Straßennetzes von Deutschland, durch eine Vielzahl von digitalen Datensätzen.

Bei den bekannten Navigationsgeräten sind zur Beschreibung des geografischen Gebiets Datenbanken vorhanden, die eine Vielzahl von solchen Datensätzen enthalten, wobei jeder Datensatz ein Objekt der Landkarte, beispielsweise einen Straßenabschnitt oder ein Geländesegment, beschreibt. Diese aus dem Stand der Technik bekannten Datenbanken mit Datensätzen zur Beschreibung von Kartenobjekten sollen nachfolgend als Ausgangsdatenbanken bezeichnet werden. Jeder Datensatz zur Beschreibung eines Landkartenobjekts besteht dabei aus einer bestimmten Anzahl von Attributen, die jeweils eine bestimmte Anzahl von unterschiedlichen Attributwerten annehmen können. Bei den Attributen kann es sich beispielsweise um die geographische Position des Landkartenobjekts und die Spezifikation als Straßenabschnitt handeln.

Beim Betrieb von Geräten, insbesondere Navigationsgeräten, oder Verwendung solcher Datenbanken zur Beschreibung einer digitalen Landkarte müssen die in der Datenbank gespeicherten Datensätze vielfach abgerufen werden. Insbesondere beim Aufbau der graphischen Darstellung eines Ausschnitts der Landkarte müssen die Datensätze zur Beschreibung der Kartenobjekte in diesem Ausschnitt aus der Datenbank ausgelesen und von einem Grafikprozessor verarbeitet werden. Ändert sich der Kartenausschnitt in rascher Folge, beispielsweise aufgrund der Fahrt eines Fahrzeugs durch das geographische Gebiet bzw. durch Manipulationen des Benutzers an dem darzustellenden Kartenausschnitt, müssen sehr viele Datensätze mit den darin enthaltenen Attributen ausgelesen und verarbeitet werden. Die zu verarbeitenden Datenmengen sind dabei durchaus sehr groß, da die einzelnen Kartenobjekte jeweils durch eine Vielzahl von Attributwerten spezifiziert werden müssen und das frische Gebiet seinerseits eine sehr große Anzahl von Kartenobjekten enthält.

Im Ergebnis ist es deshalb bei Verwendung der aus dem Stand der Technik bekannten Datenbanken (Ausgangsdatenbanken) zur elektronischen Verarbeitung von digitalen Landkarten, insbesondere zu deren graphischer Darstellung, notwendig, sehr große Datenmengen zu verwalten. Dies stellt einen erheblichen Nachteil dar, da entweder ein entsprechend großer und schneller Arbeitsspeicher vorhanden sein muss oder die jeweiligen Daten sehr oft aus einem Massenspeicher ausgelesen und in den Arbeitsspeicher kopiert werden müssen.

Aufgabe der vorliegenden Erfindung ist es deshalb, ein Verfahren zur Erzeugung einer digitalen Landkarte vorzuschlagen, mit dem Speicherplatz eingespart und Rechenleistung effektiver genutzt werden kann.

Diese Aufgabe wird durch ein Verfahren nach der Lehre des Anspruchs 1 gelöst.

Weiter ist es Aufgabe der vorliegenden Erfindung, ein neues Navigationsgerät vorzuschlagen, das bei geringerem Speicherplatzbedarf eine höhere Leistungsfähigkeit bietet. Diese Aufgabe wird durch ein Navigationsgerät nach der Lehre des unabhängigen Vorrichtungsanspruchs gelöst.

Das erfindungsgemäße Verfahren beruht auf der Grundüberlegung, dass bestimmte Attributwertkombinationen oder Attributwertunterkombinationen in den Datensätzen zur Beschreibung der Landkartenobjekte sehr häufig vorkommen. Da diese häufig verwendeten Attributwertkombinationen bzw. Attributwertunterkombinationen in den bekannten Datenbanken zur Beschreibung einer digitalen Landkarte jeweils mehrfach in den einzelnen Datensätzen abgespeichert sind, wird sehr viel Speicherplatz benötigt. Durch geschickte Umspeicherung dieser Daten kann der Speicherplatzbedarf verringert und die Verarbeitungsgeschwindigkeit gesteigert werden.

Erfindungsgemäß wird deshalb die Ausgangsdatenbank in einer Analyseeinrichtung zunächst analysiert und während dieser Analyse festgestellt, welche Attributwertkombinationen bzw. Attributwertunterkombinationen in den verschiedenen Datensätzen vorkommen. Jeder der vorkommenden Attributwertkombinationen bzw. Attributwertunterkombinationen wird dann ein eindeutiges Kombinationskennzeichen zugeordnet. Die während der Analyse festgestellten Attributwertkombinationen bzw. Attributwertunterkombinationen werden in einer neuen, ersten Teildatenbank zusammen mit dem jeweils zugeordneten Kombinationskennzeichen abgespeichert.

Anschließend werden die Datensätze der Ausgangsdatenbank wiederum analysiert, und aus jedem Datensatz wird ein neuer Datensatz dadurch erzeugt, dass die in den jeweiligen Datensätzen festgestellten Attributwertkombinationen oder Attributwertunterkombinationen durch das zugeordnete Kombinationskennzeichen ersetzt werden. Diese neuen Daten, die durch Ersetzung der Attributwertkombinationen und Attributwertunterkombinationen durch das zugeordnete Kombinationskennzeichen entstanden sind, werden dann als neue Datensätze in einer neuen, zweiten Teildatenbank der digitalen Landkarte abgespeichert.

Im Ergebnis bedeutet also das erfindungsgemäße Verfahren, dass die Ausgangsdatenbank auf zwei Teildatenbanken abgebildet wird. In der ersten Teildatenbank sind dabei die vorkommenden Attributwertkombinationen bzw. Attributwertunterkombinationen mit einem jeweils eindeutig zugeordneten Kombinationskennzeichen gespeichert. In der zweiten Teildatenbank werden die einzelnen Datensätze der Ausgangsdatenbank dadurch umgespeichert, dass die jeweils festgestellten Attributwertkombinationen bzw. Attributwertunterkombinationen durch die jeweils zugeordneten Kombinationskennzeichen ersetzt werden. Enthält die Ausgangsdatenbank in jedem Datensatz neue Attributwertkombinationen, die sich nicht wiederholen, wird durch Anwendung des erfindungsgemäßen Verfahrens keine Speicherplatzreduktion möglich. Da die digitalen Landkarten jedoch sehr häufig Attributwertkombinationen bzw. Attributwertunterkombinationen enthalten, die in einer großen Anzahl von Datensätzen in wiederholter Form gespeichert werden müssen, kann durch die erfindungsgemäße Abbildung der Ausgangsdatenbank auf die beiden Teildatenbanken eine erhebliche Datenreduktion erreicht werden.

In welcher Weise die mit dem erfindungsgemäßen Verfahren erzeugten Daten in den beiden Teildatenbanken weiterverarbeitet werden, ist grundsätzlich beliebig. Sind die beiden Teildatenbanken beispielsweise auf einem Massenspeicher in einem Navigationssystem gespeichert, so müssen Teildatenbanken für eine Verarbeitung, beispielsweise zur Anzeige eines Kartenausschnitts, zumindest teilweise in den Arbeitsspeicher des Navigationssystems umgespeichert werden. In der einfachsten Form können dazu die für die aktuelle Verarbeitung relevanten Teile der beiden Teildatenbanken aus dem Massenspeicher in den Arbeitsspeicher gespiegelt werden. Besonders vorteilhaft ist es jedoch, wenn die relevanten Daten orientiert an den Grundsätzen der objektorientierten Programmierung umgespeichert werden. Dies kann im Rahmen der Umspeicherung der Daten insbesondere dadurch geschehen, dass bei Feststellung einer neuen Attributwertkombination oder einer neuen Attributwertunterkombination, die bisher so noch nicht vorgekommen ist, eine neue Datenklasse mit zugeordneter Klassenbezeichnung erzeugt wird. Jeder dieser Datenklassen ist ein bestimmter Datensatztyp zugeordnet, der durch mehrere jeweils Datensatztypen spezifische Klassenattribute charakterisiert ist. Die Kombination dieser Klassenattribute der neu erzeugten Datenklasse entspricht dabei identisch der neu festgestellten Attributwertkombination bzw. Attributwertunterkombination.

Die Klassenbezeichnung der neu erzeugten Datenklasse kann dann als Kombinationskennzeichen der neu festgestellten Attributwertkombination bzw. Attributwertunterkombination definiert werden.

Die Daten der zweiten Teildatenbank werden dahingehend analysiert, wo die Attributwertkombinationen bzw. Attributwertunterkombinationen auftreten, deren Kombination gerade den Klassenattributen einer bestimmten Datenklasse entspricht. Diese Datensätze werden dann auf einen neuen Datensatz gerade in dieser Datenklasse abgebildet, wobei durch die der Datenklasse zugeordneten Klassenbezeichnung die eindeutige Zuordnung zu den Klassenattributen gewährleistet ist.

Werden bei der Umspeicherung die Datensätze aus den beiden Teildatenbanken zur Beschreibung der Landkartenobjekte auf Datensätze einer bestimmten Datenklasse abgebildet, so müssen variable Attributwerte, beispielsweise die Koordinaten der geographischen Position des entsprechenden Objekts, jeweils als Datensatz spezifisch abgespeichert werden, was einen hohen Verarbeitungsaufwand darstellt. Dieser Verarbeitungsaufwand kann durch die Verwendung einer Verfahrensvariante mit Datenklassenmustern reduziert werden. Gemäß dieser Verfahrensvariante wird bei Feststellung einer neuen Attributwertkombination ein neues Datenklassenmuster mit zugeordneter Klassenmusterbezeichnung erzeugt. Jedes Datenklassenmuster stellt einen neuen Datentypen dar, der durch mehrere unveränderbare Klassenattribute und eine bestimmte Anzahl von veränderbaren Musterattributen charakterisiert ist. Die Kombination der unveränderbaren Klassenattribute des Datenklassenmusters entspricht dabei identisch der neu festgestellten Attributwertunterkombination. Die variabel veränderbaren Musterattribute dagegen können datensatzbezogen verändert werden, so dass beispielsweise die jeweiligen geographischen Positionskoordinaten als veränderbare Musterattribute speicherbar sind.

Die Klassenmusterbezeichnung des neuen Datenklassenmusters dient wieder als eindeutiges Kombinationskennzeichen.

Bei der Analyse der Daten werden die Datensätze der Teildatenbanken dann auf neue Datensätze abgebildet, wobei jeder Datensatz einem bestimmten Datenklassenmuster entspricht.

Durch das erfindungsgemäße Verfahren und die entsprechende Datenaufbereitung der zur Beschreibung eines geographischen Gebiets notwendigen Datensätze kann ein verbessertes Speichermanagement realisiert werden.

Besonders häufig ist die Ausgangsdatenbank auf einem Server außerhalb eines Navigationsgeräts gespeichert, wobei die Datensätze mit einer auf dem Server installierten Analyseeinrichtung erfindungsgemäß analysiert werden, und wobei die erste Teildatenbank und/oder die zweite Teildatenbank der digitalen Landkarte auf einen Speicher des Navigationsgeräts übertragen werden. Die erfindungsgemäße Abbildung der Ausgangsdatenbank auf zwei Teildatenbanken erfolgt dann mittels einer auf dem Server installierten Analyseeinrichtung. Anschließend werden die beiden Teildatenbanken dann an das Navigationsgerät übertragen.

Sind die beiden nach der Analyse erzeugten Teildatenbanken in einem Massenspeicher gespeichert, können also die beiden Teildatenbanken unmittelbar oder die aus den Teildatenbanken abgeleiteten Datensätze einer Datenklasse oder die aus den Teildatenbanken abgeleiteten Datensätze eines Datenklassenmusters zumindest teilweise in einem Arbeitsspeicher des Navigationsgeräts gespeichert werden. So ist es insbesondere möglich, dass die beiden Teildatenbanken unveränderlich auf einem Massenspeicher, beispielsweise auf einer DVD oder einer CD-Rom oder einer Festplatte, gespeichert sind. Zur Reduktion des für die Verarbeitung dieser Daten erforderlichen Speicherplatzes werden dann erfindungsgemäß die beiden Teildatenbanken umgespeichert. Während der Verwendung der beiden Teildatenbanken, insbesondere in einem Navigationsgerät, sind diese dann zumindest teilweise im Arbeitsspeicher gespeichert. Auf diese Weise kann der im Arbeitsspeicher zur Verfügung stehende Speicherplatz effektiver genutzt werden bzw. es können effektiv Caching-Techniken ausgenutzt werden.

Auf welchen Geräten das erfindungsgemäße Verfahren genutzt wird, ist grundsätzlich beliebig. Besonders große Vorteile bietet die Verwendung des erfindungsgemäßen Verfahrens beim Betrieb von Navigationsgeräten. Dabei ist es insbesondere denkbar, dass der Massenspeicher des Navigationsgeräts die Ausgangsdatenbank enthält und die erfindungsgemäße Abbildung der Ausgangsdatenbank auf die beiden Teildatenbanken durch eine auf dem Navigationsgerät installierte Analyseeinrichtung, die beispielsweise in der Art einer entsprechenden Software ausgebildet sein kann, durchgeführt wird. Der Massenspeicher des Navigationsgeräts kann dabei insbesondere in der Art einer Festplatte, einer CD-Rom oder einer sonstigen Speicherkarte ausgebildet sein.

Besonders große Vorteile bietet die Verwendung der beiden erfindungsgemäßen Teildatenbanken bei der graphischen Darstellung der digitalen Landkarte an einer Anzeigeeinrichtung eines Endgeräts, insbesondere eines Navigationsgeräts. Durch die erfindungsgemäße Datenreduktion können mehr Landkartenobjekte in den schnellen Arbeitsspeicher eingelesen und dort mit schnellen Zugriffszeiten durch den Bildgenerator verarbeitet werden.

Nach einer weiteren bevorzugten Verfahrensvariante werden bei der Erzeugung der beiden Teildatenbanken Datensätze der Ausgangsdatenbank, die zur Beschreibung von an einer bestimmten Position gelegenen Kartenelementen dienen, in bestimmter Weise auf zwei Datensätze der beiden Teildatenbanken abgebildet. Die Datensätze in der zweiten Teildatenbank enthalten dabei die Positionskoordinaten des Kartenelements, da diese Positionsattribute jeweils datensatzspezifisch sind. Die erste Teildatenbank enthält dagegen die Eigenschaftsattribute aller Kartenelemente mit der gleichen Attributwertunterkombination, insbesondere ein Straßenfunktionsklassenattribut und/oder ein Straßenkategorieattribut und/oder ein Gestaltattribut und/oder ein Fahrtrichtungsattribut.

Werden bei der Erzeugung der beiden Teildatenbanken Datenklassenmuster verwendet, so sollten bei Datensätzen, die zur Beschreibung von an einer bestimmten Position gelegenen Kartenelementen dienen, die Positionskoordinaten des Kartenelements als veränderbare Musterattribute und die Eigenschaftsattribute des Kartenelements als Klassenattribute gespeichert werden.

Die beiden erfindungsgemäßen Teildatenbanken können jeweils auch noch in mehrere Unterteildatenbanken aufgeteilt sein. Jeweils zwei Unterteildatenbanken sind dabei paarweise einander zugeordnet. Bestimmte Kartenobjekttypen, beispielsweise Segmente, Punkte, Polygone, Straßen, Orte, interessante Orte (Points of Interest, POI), Regionen, Gemeinden, können dann jeweils in bestimmten, diesem Kartenobjekttyp zugeordneten Paaren von erster Unterteildatenbank und zweiter Unterteildatenbank abgespeichert werden.

Das erfindungsgemäße Navigationsgerät ist dadurch charakterisiert, dass in einem Speicher des Navigationsgeräts zwei Teildatenbanken gemäß der Lehre des Verfahrenshauptanspruchs gespeichert sind.

Der Speicher zur Speicherung zumindest von Teilen der beiden Teildatenbanken sollte dabei bevorzugt in der Art des schnellen Arbeitsspeichers des Navigationsgeräts ausgebildet sein, da aufgrund der erfindungsgemäßen Datenreduktion eine Vielzahl von Objekten zur Kartendarstellung auf diese Weise im Arbeitsspeicher verfügbar gemacht werden kann.

Verschiedene Aspekte des erfindungsgemäßen Verfahrens sind in den Zeichnungen schematisch dargestellt und werden nachfolgend beispielhaft erläutert.

Es zeigen:
- Fig. 1: eine schematisch dargestellte Ausgangsdatenbank;
- Fig. 2: die Ausgangsdatenbank nach der Durchführung eines ersten Analyseschritts und der Identifikation von Attributwertkombinationen;
- Fig. 3: die aus der Ausgangsdatenbank gemäß Fig. 2 abgeleitete erste und zweite Teildatenbank;
- Fig. 4: eine schematische Darstellung des Zugriffs auf die gespeicherten Teildatenbanken in einem Navigationsgerät;
- Fig. 5: eine schematische Darstellung der Arbeitsspeicherorganisation im Navigationsgerät nach Auslesen von Kartendatenobjekten.

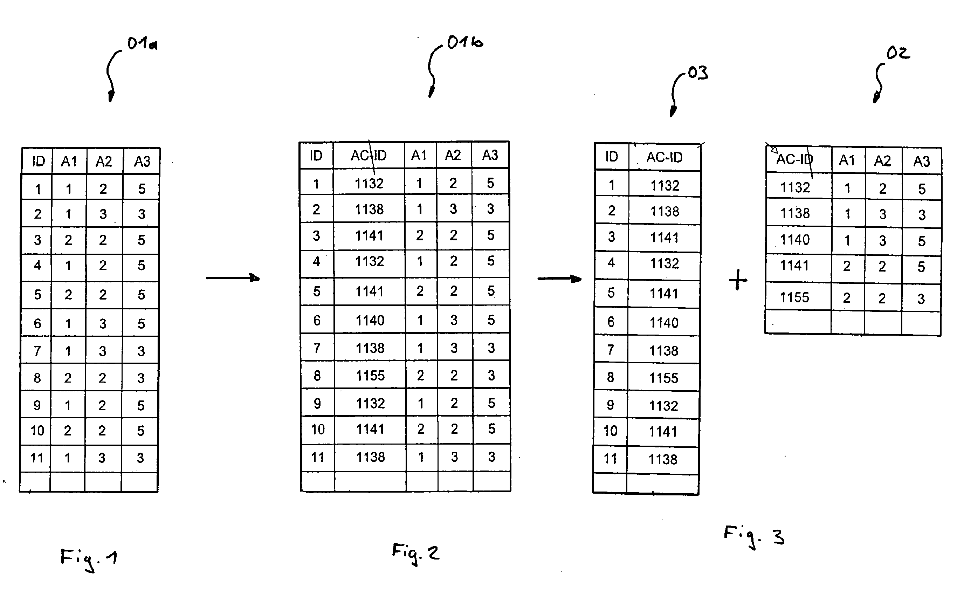

Fig. 1 zeigt eine lediglich schematisch angedeutete Ausgangsdatenbank 01a, die im dargestellten Beispiel lediglich elf Datensätze mit jeweils drei Attributwerten für die Attribute A1, A2 und A3 enthält. Jeder einzelne Datensatz ist dabei durch einen Datensatz-ID identifizierbar. In einer tatsächlichen Datenbank können mehrere hunderttausend solcher einzelnen Datensätze mit verschiedenen Attributwertkombinationen enthalten sein.

Fig. 2 zeigt die Ausgangsdatenbank 01 nach einer Analyse zur Suche von identischen Attributwertkombinationen. Die Analyse zeigt dabei, dass in der Ausgangsdatenbank 01b fünf verschiedene Attributwertkombinationen enthalten sind. Jeder Attributwertkombination wird dabei in der Spalte AC-ID ein eindeutiges Kombinationskennzeichen zugeordnet. Das Kombinationskennzeichen 1132 beschreibt dabei die Attributwertkombination A1 = 1, A2 = 2 und A3 = 5. Das Kombinationskennzeichnen AC-ID = 1138 ist durch die Attributwertkombination A1 = 1, A2 = 3 und A3 = 3 charakterisiert.

Wie aus Fig. 3 ersichtlich, wird die im Zwischenschritt analysierte Ausgangsdatenbank 01b in einer ersten Teildatenbank 02 und einer zweiten Teildatenbank 03 abgebildet. Die erste Teildatenbank 02 enthält dabei alle vorkommenden Attributwertkombinationen mit dem jeweils zugeordneten Kombinationskennzeichen AC-ID. In der zweiten Teildatenbank 03 sind die elf verschiedenen Datensätze nun durch das jeweils zugeordnete Kombinationskennzeichen charakterisiert, wobei die Einzelwerte von A1, A2 und A3 in der zweiten Teildatenbank 03 nicht mehr gespeichert sind. Bei dem in Fig. 1 bis Fig. 3 dargestellten sehr einfachen Beispiel wird der ursprünglich benötigte Speicherplatzbedarf von insgesamt 44 Speicherplätzen (4 x 11) bereits auf 42 Speicherplätze (2x11+5x4) reduziert. Enthält die Ausgangsdatenbank 01 eine sehr hohe Anzahl von Datensätzen mit jeweils gleicher Attributwertkombination, kann die Reduktion des Speicherplatzes entsprechend sehr viel größer sein.

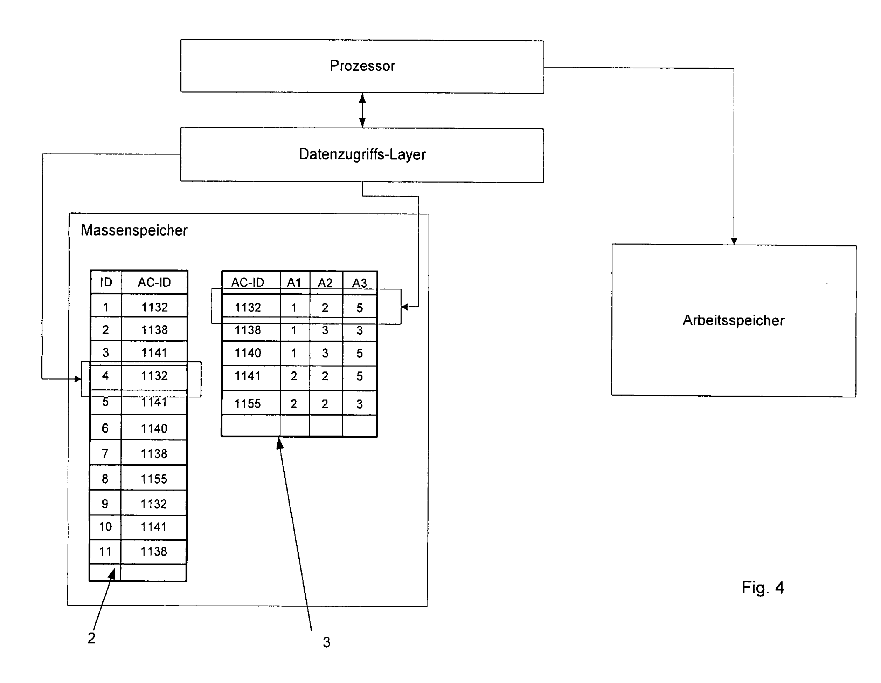

Fig. 4 zeigt den innerhalb des Navigationssystems stattfindenden Zugriff auf die nach dem erfinderischen Verfahren in den beiden Teildatenbanken (02,03) gespeicherten Kartenobjekte, dabei sind die Teildatenbanken im Massenspeicher, z.B. auf CD, SD-Karte oder Festplatte, vorgehalten.

Über den Prozessor erhält, z.B. aufgrund einer Aktion zur Anzeige einer Karte auf dem Bildschirm des Navigationssystems, der Datenzugriffs-Layer den Auftrag, die Daten des Kartenelements mit der ID 4 auszulesen. Der Datenzugriffs-Layer sucht nun in der ersten Teildatenbank 02 den Datensatz mit der ID 4. In diesem ist - neben variablen Informationen - die Attributwertunterkombinations-Kennung 1132 gespeichert. Also liest der Datenzugriffs-Layer aus der zweiten Teildatenbank 03 die Attribut-Daten der Attributdatenkombination mit der AC-ID 1132 aus. Diese Daten werden zusammen an den Prozessor übergeben, der die Daten geeignet im Arbeitsspeicher ablegt.

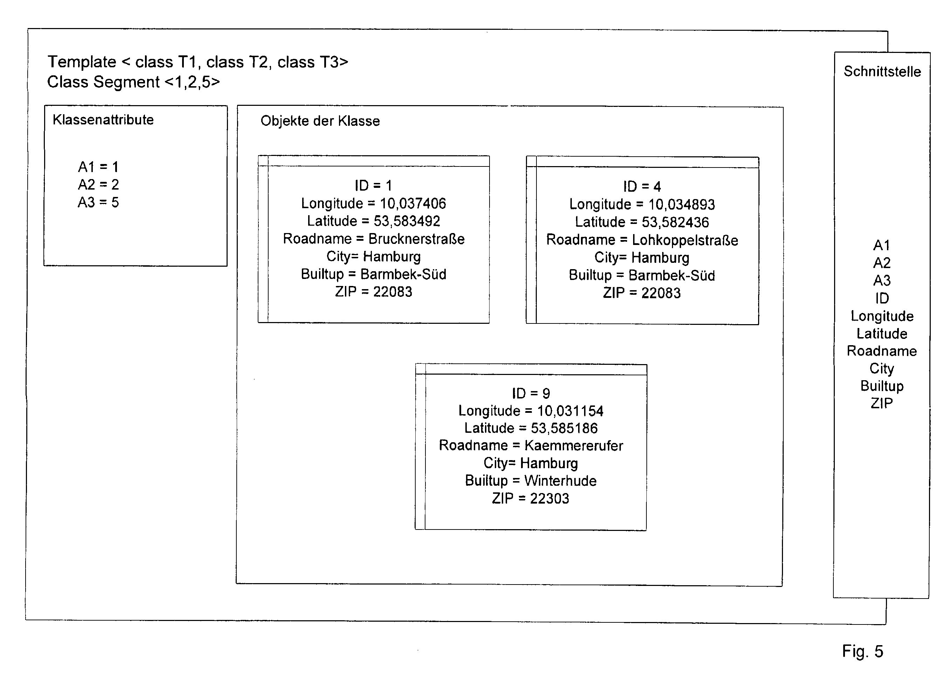

Eine beispielhafte Organisation der Daten im Arbeitsspeicher zeigt Fig. 5. Hier wird eine Kartenobjektklasse, in diesem Fall ein Segment, dargestellt, die sich aufbaut als Template mit den Klassenattributen A1, A2 und A3. Durch die Template-Instanziierung aufgrund der Attributwerte aus der Teildatenbank 03 erhalten die Klassenattribute die Templateargumente T1, T2 und T3 zugewiesen. Im Beispiel sind das die Werte 1, 2 und 5.

Die Kartenobjekte mit den IDs 1, 4 und 9 wurden aus der Teildatenbank 02 ausgelesen, und es wurden aufgrund der Attributkombination aus der Teildatenbank 03 Objekte des Template-Klasse Segments mit den Template-Attributen 1, 2 und 5 erzeugt. In den Objekten sind individuell die variablen Attribute, wie die Positionskoordinaten, Straßen und Stadtname etc., gespeichert. In den Klassenattributen werden dagegen einmal für alle Objekte dieser Klasse die Werte aus der Teildatenbank 03 ausgelesen.

Der Zugriff auf alle Objekte dieser Klasse verläuft über die Schnittstelle, in der alle Attribute, d.h. Klassen- und Objektattribute, zusammen und auf gleichem Wege zugreifbar sind. Für eine Systemkomponente, die auf die Schnittstelle zugreift, ist auf diese Weise nicht erkennbar, ob eines der ausgelesenen Attribute ein Klassen- oder Objektattribut ist.

## Patentansprüche

1. Verfahren zur Erzeugung einer auf einem elektronischen Speichermedium speicherbaren, digitalen Landkarte, in der ein geographisches Gebiet durch eine Vielzahl von Datensätzen beschrieben ist, mit folgenden Verfahrensschritten:
a) Laden einer Ausgangsdatenbank (01), in der das geographische Gebiet durch eine Vielzahl von Datensätzen beschrieben ist, in eine elektronische Analyseeinrichtung, wobei jeder Datensatz ein Objekt der Landkarte beschreibt, und wobei jeder Datensatz aus einer definierten Anzahl von Attributen besteht, und wobei jedes Attribut eine definierte Anzahl von unterschiedlichen Attributwerten annehmen kann,
b) Feststellung von in den Datensätzen der Datenbank vorkommenden Attributwertkombinationen oder Attributwertunterkombinationen,
c) Zuordnung eines eindeutigen Kombinationskennzeichens zu jeder Attributwertkombination oder Attributwertunterkombination,
d) Speicherung der in der Datenbank festgestellten Attributwertkombinationen oder Attributwertunterkombinationen mit den jeweils zugeordneten Kombinationskennzeichen als erste Teildatenbank (02) der digitalen Landkarte,
e) Analyse aller Datensätze der Ausgangsdatenbank (01), wobei zu jedem Datensatz ein neuer Datensatz **dadurch** erzeugt wird, dass die in jedem Datensatz vorhandenen Attributwertkombinationen oder Attributwertunterkombinationen durch das den Attributwertkombinationen oder Attributwertunterkombinationen zugeordnete Kombinationskennzeichen ersetzt werden,
f) Speicherung der neuen Datensätze in einer zweiten Teildatenbank (03) der digitalen Landkarte.

2. Verfahren nach Anspruch 1,
**dadurch gekennzeichnet,**
**dass** die erste Teildatenbank (02) und die zweite Teildatenbank (03) umgespeichert werden, wobei
b1) jeweils bei Feststellung einer neuen Attributwertkombination oder Attributwertunterkombinationen eine neue Datenklasse mit einer zugeordneten Klassenbezeichnung erzeugt wird, wobei jede Datenklasse einen bestimmten Datensatztyp durch mehrere Klassenattribute beschreibt, und wobei die Kombination der Klassenattribute der neuen Datenklasse identisch der neu festgestellten Attributwertkombination oder Attributwertunterkombination entspricht,
c1) die Klassenbezeichnung der neu erzeugten Datenklasse als Kombinationskennzeichen gesetzt wird,
d1) alle neuen Datenklassen mit den jeweils zugeordneten Klassenattributen und der jeweils zugeordneten Klassenbezeichnung gespeichert werden,
e1) bei Feststellung eines Datensatzes, dessen Attributwertkombination oder Attributwertunterkombination der Kombination der Klassenattribute einer bestimmten Datenklasse entspricht, ein neuer Datensatz dieser Datenklasse erzeugt wird,
f1) die neuen Datensätze der digitalen Landkarte als Datensätze der zugeordneten Datenklasse gespeichert werden.

3. Verfahren nach Anspruch 1,
**dadurch gekennzeichnet,**
**dass** die erste Teildatenbank (02) und die zweite Teildatenbank (03) umgespeichert werden, wobei
b2) jeweils bei Feststellung einer neuen Attributwertunterkombination ein neues Datenklassenmuster mit einer zugeordneten Klassenmusterbezeichnung erzeugt wird, wobei jedes Datenklassenmuster einen bestimmten Datentypen durch mehrere unveränderbare Klassenattribute und eine bestimmte Anzahl von veränderbaren Musterattributen beschreibt, und wobei die Kombination der unveränderbaren Klassenattribute des neuen Datensatzmusters identisch der neu festgestellten Attributwertunterkombination entspricht,
c2) die Klassenmusterbezeichnung des neu erzeugten Datenklassenmusters als Kombinationskennzeichen gesetzt wird,
d2) alle neuen Datenklassenmuster mit den jeweils zugeordneten Klassenattributen und Musterattributen und der jeweils zugeordneten Klassenmusterbezeichnung gespeichert werden,
e2) bei Feststellung eines Datensatzes, dessen Attributwertunterkombination einem bestimmten Datenklassenmuster entspricht, und dessen neben der Attributwertunterkombination verbleibende Attribute der Art und Anzahl von veränderbaren Musterattributen dieses Datenklassenmusters entsprechen, ein neuer Datensatz dieses Datenklassenmusters erzeugt wird,
f2) die neuen Datensätze der digitalen Landkarte als Datensätze des zugeordneten Datenklassenmusters gespeichert werden, wobei die neben der Attributwertunterkombination verbleibenden Attribute des Datensatzes als variable Werte in die für die Musterattribute reservierten Speicherbereiche der neuen Datensätze eingespeichert werden.

4. Verfahren nach einem der Ansprüche 1 bis 3,
**dadurch gekennzeichnet,**
**dass** die Ausgangsdatenbank (01) auf einem Server außerhalb eines Navigationsgeräts gespeichert ist, wobei die Datensätze mit einer auf dem Server installierten Analyseeinrichtung analysiert werden, und
wobei die erste Teildatenbank (02) und/oder die zweite Teildatenbank (03) der digitalen Landkarte auf einen Speicher des Navigationsgeräts übertragen werden.

5. Verfahren nach einem der Ansprüche 1 bis 4,
**dadurch gekennzeichnet,**
**dass** die beiden nach der Analyse erzeugten Teildatenbanken (02, 03) in einem Massenspeicher gespeichert sind, wobei die Teildatenbanken (02, 03) oder die aus den Teildatenbanken (02, 03) abgeleiteten Datensätze einer Datenklasse oder die aus den Teildatenbanken (02, 03) abgeleiteten Datensätze eines Datenklassenmusters zumindest teilweise in einem Arbeitsspeicher des Navigationsgeräts gespeichert werden.

6. Verfahren nach Anspruch 5,
**dadurch gekennzeichnet,**
**dass** der Massenspeicher und/oder der Arbeitsspeicher Bestandteil eines Navigationsgeräts ist.

7. Verfahren nach Anspruch 5 oder 6,
**dadurch gekennzeichnet,**
**dass** der Massenspeicher in der Art einer Festplatte, einer CD-Rom oder einer Speicherkarte ausgebildet ist.

8. Verfahren nach einem der Ansprüche 1 bis 7,
**dadurch gekennzeichnet,**
**dass** mehrere Datensätze der ersten Teildatenbank (02) und/oder der zweiten Teildatenbank (03) der digitalen Landkarte von einem Bildgenerator zur Erzeugung einer graphischen Kartendarstellung auf einer Anzeigeeinrichtung eines Endgerätes, insbesondere eines Navigationsgeräts, ausgelesen und weiterverarbeitet werden.

9. Verfahren nach einem der Ansprüche 1 bis 8,
**dadurch gekennzeichnet,**
**dass** bei der Erzeugung der beiden Teildatenbanken (02, 03) Datensätze der Ausgangsdatenbank (01), die zur Beschreibung von an einer bestimmten Position gelegenen Kartenelementen dienen, derart auf zumindest zwei neue Datensätze in den beiden Teildatenbanken (02, 03) abgebildet werden, dass der neue Datensatz in der zweiten Teildatenbank (03) die Positionskoordinaten des Kartenelements enthält und der neue Datensatz in der ersten Teildatenbank (02) ein Eigenschaftsattribut des Kartenelements, insbesondere ein Straßenfunktionsklassenattribut und/oder ein Straßenkategorieattribut und/oder ein Gestaltattribut und/oder ein Fahrtrichtungsattribut, enthält.

10. Verfahren nach einem der Ansprüche 1 bis 9,
**dadurch gekennzeichnet,**
**dass** die Positionskoordinaten des Kartenelements als veränderbare Musterattribute eines Datensatzes eines bestimmten Datenklassenmusters gespeichert werden, wobei die Eigenschaftsattribute des Kartenelements den Klassenattributen dieses Datenklassenmusters entsprechen.

11. Verfahren nach einem der Ansprüche 1 bis 10,
**dadurch gekennzeichnet,**
**dass** die beiden Teildatenbanken (02, 03) jeweils in mehrere Unterteildatenbanken (02, 03) aufgeteilt sind, die paarweise einander zugeordnet sind, wobei Datensätze zur Beschreibung bestimmter Kartenobjekttypen, insbesondere Segmente, Punkte, Polygone, Straßen, Orte, Interessante Orte (Points of Interest, POI), Regionen, Gemeinden, jeweils in bestimmten, diesem Kartenobjekttyp zugeordneten Paaren einer ersten Unterteildatenbank und einer zweiten Unterteildatenbank abgespeichert werden.

12. Navigationsgerät mit einem Speicher, in dem eine digitale Landkarte zur Beschreibung eines geographischen Gebiets abgespeichert ist,
**dadurch gekennzeichnet,**
**dass** in dem Speicher zwei Teildatenbanken (02, 03) zumindest teilweise gespeichert sind, die mit einem Verfahren nach einem der Ansprüche 1 bis 11 erzeugt wurden.

13. Navigationsgerät nach Anspruch 12,
**dadurch gekennzeichnet,**
**dass** der Speicher des Navigationsgerätes ein schneller Arbeitsspeicher ist, auf den eine Prozessoreinheit des Navigationsgerätes unmittelbaren Zugriff hat.

14. Navigationsgerät nach Anspruch 12 oder 13,
**dadurch gekennzeichnet,**
**dass** das Navigationsgerät einen Massenspeicher umfasst, auf dem die Ausgangsdatenbank (01) zur Durchführung des Verfahrens nach einem der Ansprüche 1 bis 11 gespeichert ist.
